# EUROPEAN PATENT SPECIFICATION

(11) **EP 3 976 359 B1**
(45) Date of publication and mention of the grant of the patent: **02.08.2023**
(21) Application number: 20723115.0
(22) Date of filing: 30.04.2020
(51) Int. Cl.: B29C 70/38

(54) **A FIBRE PLACEMENT HEAD**
FASERPLATZIERUNGSKOPF
TÊTE DE POSITIONNEMENT DE FIBRES

(30) Priority: 30.05.2019 GB 201907654
(43) Date of publication of application: 06.04.2022
(73) Proprietor: Rolls-Royce plc, London N1 9FX (GB)
(72) Inventor: BERASTEGUI, Gonçal, Derby DE24 8BJ (GB)
(74) Representative: Rolls-Royce plc
(86) International application number: PCT/EP2020/062101
(87) International publication number: WO 2020/239357

(56) References cited:
- US-A1- 2011 247 751
- US-A1- 2014 102 625
- US-A1- 2018 154 590
- US-A1- 2019 016 066

## Description

The present invention relates to a fibre placement head, a fibre placement machine having the fibre placement head, and a method of laying up fibre reinforcement material with the fibre placement head.

Fibre placement machines are used to place fibres or tows of fibre reinforcement material on a lay-up surface to form a pre-form of fibre reinforcement material. Fibre placement machines typically comprise a fibre placement head having a roller for compacting and steering fibres during a lay-up operation.

US 2011/247751 discloses a process for producing composite material components, in which thermoplastic prepreg tapes are laid onto a laying surface of a composite material component that is still to be completed, are heated by means of laser radiation and are pressed by means of a pressure-exerting pad of an elastic-flexible material, for example an elastomer. The pressure-exerting pad has a low absorption to the laser radiation. A constant contact pressure is achieved by means of a fluid located in the pressure-exerting pad. The internal pressure of the pressure-exerting pad may be controlled to a constant value.

US 2014/102625 discloses a method for fibre placement with the aid of a roller. The roller is able to pivot about a rotation axis and to lay a plurality of first pre-impregnated fibres on second pre-impregnated fibres of a laying surface by rolling over said laying surface.

According to claim 1, there is provided a fibre placement head comprising: a roller mount comprising an axle defining a roller axis; a hollow roller defining an internal chamber, the roller being mounted on the axle and configured to rotate about the roller axis; and a pressurised fluid system configured to deliver and discharge pressurised fluid to and from the internal chamber of the roller, to vary a stiffness of the roller by varying a pressure of fluid in the chamber.

The pressurised fluid system may be configured to deliver and discharge pressurised fluid to and from the internal chamber of the roller through the axle of the roller mount.

The pressurised fluid system comprises a controller configured to control the discharge and optionally the delivery of the fluid in the chamber to control the pressure in the chamber.

The pressurised fluid system may comprise a pressurised fluid inlet configured to be fluidically connected to a pressurised fluid source. The pressurised fluid system may comprise a pressurised fluid outlet configured to allow discharge of fluid from the chamber.

The pressurised fluid system may comprise an outlet valve disposed at the pressurised fluid outlet. The outlet valve may be selectively openable to allow discharge of the fluid from the chamber, to thereby control the pressure within the chamber.

The pressurised fluid system may comprise an outlet valve disposed at the pressurised fluid outlet. The outlet valve may have a pressure release threshold such that the outlet valve passively opens when pressure of fluid in the chamber exceeds the pressure release threshold. The controller may be configured to control the pressure release threshold of the outlet valve.

The term "passively" is intended to mean that the outlet valve opens under mechanical load caused by the pressure of the fluid, rather than by a controllable actuator or the like.

The pressurised fluid system may comprise an inlet valve disposed at the pressurised fluid inlet. The controller may be configured to control selective opening and closing of the inlet valve. Selectively controlling the opening and closing of the inlet valve may be independent of any control of the pressure release threshold.

The controller is configured to receive pressure control data, relating to time-varying or space-varying optimised pressure within the chamber along a pre-programmed headpath for the fibre placement head. The controller is configured to control the pressure in the chamber based on the pressure control data such that the stiffness of the roller is varied along the head path of the fibre placement head.

The stiffness of the roller may be varied to optimise the stiffness. Optimising the stiffness of the roller may comprise determining an optimal compromise in stiffness of the roller between steering performance and roller crush performance.

The fluid may be a gas such as air. The pressurised fluid system may comprise a pressurised fluid source connected to the pressurised fluid inlet. The pressurised fluid source may be a pneumatic actuator.

The pressurised fluid system may comprise a sensor disposed within the chamber to monitor the pressure of the fluid within the chamber and to generate a pressure parameter which is representative of the pressure in the chamber.

The controller may receive the pressure parameter from the sensor, and may control discharge of the pressurised fluid from the chamber based on the pressure parameter.

The pressurised fluid system may be configured to deliver heated pressurised fluid to the internal chamber of the roller.

According to claim 11, there is provided a fibre placement machine comprising a fibre placement head according to any of claims 1-10.

According to claim 12, there is provided a method of laying up fibre reinforcement material on a lay-up surface with a fibre placement head according to any of claims 1-10, the method comprising: controlling the discharge of fluid from the chamber of the roller to vary the pressure in the chamber of the roller during lay-up.

The method may further comprise controlling the delivery of fluid into the chamber of the roller to vary the pressure in the chamber of the roller during lay-up.

A controller may receive pressure control data relating to a predetermined variable stiffness, and the controller controls the delivery of fluid from the chamber during lay-up based on the pressure control data. A controller may receive pressure control data relating to a predetermined variable stiffness, and wherein the controller controls the discharge of fluid from the chamber during lay-up based on the pressure control data.

The method may comprise determining pressure control data for controlling the discharge of fluid from the chamber of the roller during lay-up, wherein the determination is based on determining a variable stiffness of the roller along the headpath based on a profile of the lay-up surface along the headpath.

The profile of the lay-up surface may include at least a 2D profile of the lay-up surface at each of a plurality of lay-up locations along the headpath where the roller engages the lay-up surface. This may permit either a simulation of roller equipment or a rules-based determination of suitable roller stiffness or pressure for the profile.

Embodiments will now be described by way of example only, with reference to the Figures, in which:
**Figure 1** is a schematic perspective view of a first example fibre placement machine applying fibre reinforcement material on a tool;
**Figure 2** is a schematic cross-sectional view of a roller on a first example fibre placement head applying fibre reinforcement material on a substrate received on a tool;
**Figure 3** is a schematic cross-sectional view of a second example fibre placement head; and
**Figure 4** is a flow chart showing steps of a process for laying up tows using the first or second example fibre placement head.

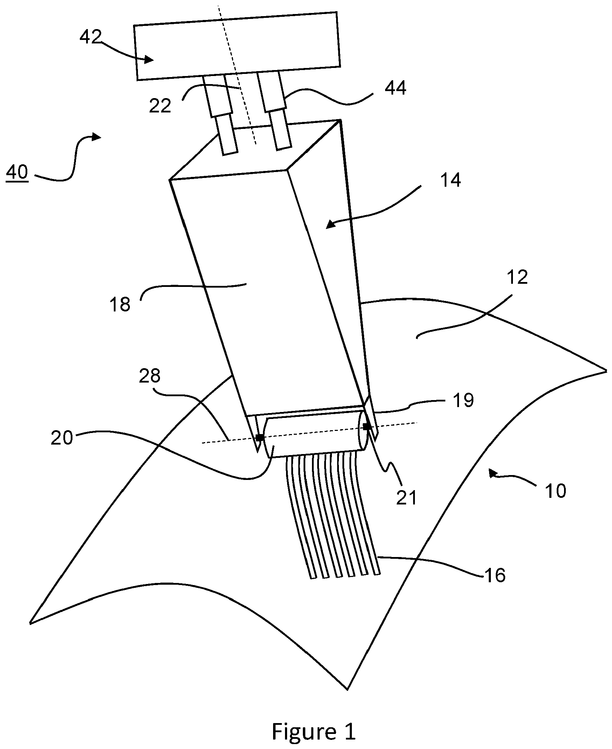

**Figure 1** shows a tool 10 defining a lay-up surface 12, and a fibre placement machine 40 disposed over the tool 10. The fibre placement machine 40 comprises a fibre placement head 14 disposed over and moveable relative the tool 10 to apply a plurality of tows 16 of fibre reinforcement material onto the lay-up surface 12. The fibre placement head 14 comprises a head body 18 extending along a generally longitudinal direction and supporting a roller 20 on a roller mount 19 at its distal end configured to traverse the lay-up surface 12 along a pre-programmed headpath to apply fibre reinforcement material thereto during a lay-up operation.

The fibre placement head 14 and tool 10 are moveable relative one another in six degrees of freedom including three degrees of translation and three degrees of rotation. In this particular example, the tool 10 is configured to remain static and the fibre placement head 14 is mounted to a support (not shown) configured to manipulate the fibre placement head 14 with up to six degrees of freedom. In other examples, the degrees of freedom may be distributed between the tool and the head, such that the tool and fibre placement head may both be configured to move (with respect to different degrees of freedom). For example, the tool may be configured to rotate about two rotational axis of freedom (e.g. pitch and roll) and one translational degree of freedom (e.g. a vertical or "z" direction, whereas the fibre placement head 14 may be mounted to a support (not shown) and configured to move with respect to the remaining rotational degree of freedom (e.g. "yaw") and translational degrees of freedom (the lateral or "x" and "y" directions). In further examples, the fibre placement head may remain static and the tool may be configured to move relative the fibre placement head, but in other examples the degrees of freedom may be distributed between the tool and head in any combination.

As shown in Figure 1, in this example the head body 18 extends along a generally longitudinal axis from a proximal end farthest from the tool to a distal end where the roller 20 is located for pressing against the tool 10.

The fibre placement head 14 is mounted to a support by a resilient mount 42 so that it is translatable with respect to the resilient mount along a compaction axis 22 in response to engaging the tool 10 or a substrate received on the tool 10. The resilient mount 42 is provided with a biasing mechanism 44 to urge the fibre placement head 14 along the compaction axis 22 relative the resilient mount towards the tool 10. In this particular example, the biasing mechanism 44 of the fibre placement machine 40 comprises compressed gas apparatus including a reservoir of compressed gas, a pressure-maintaining valve, and a pneumatic actuator (not shown) for driving the fibre placement head 14 along the compaction axis 22. The reservoir of compressed gas is provided so that a compaction pressure or compaction force (for example, approximately 500N to 1000N) acting on the fibre placement head 14 along the compaction axis 22 remains substantially constant irrespective of the position of the fibre placement head 14 within its travel.

It will be appreciated that if the fibre placement head were not resiliently moveable along the compaction axis, any inaccuracy in the movement of the roller would result in the roller not contacting the lay-up surface if the roller is too high (i.e. above the lay-up surface), or being driven into the lay-up surface (i.e. colliding) if the roller is held too low (i.e. below the lay-up surface). In the latter case, small tolerances may be accommodated by deformation of a deformable roller.

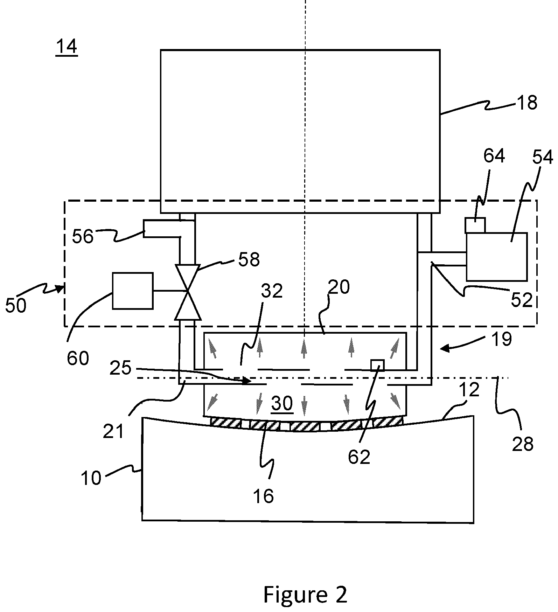

**Figure 2** schematically shows a cross-sectional view of the fibre placement head 14 and the tool 10. The roller 20 is positioned over the tool 10 to press a plurality of tows 16 against the lay-up surface 12 of the tool 10 during a lay-up operation. The roller mount 19 comprises an axle 21 defining a roller axis 28 about which the roller 20 is rotatable to move over the lay-up surface 12 to apply the tows 16 of fibre reinforcement material thereto. In this example, the roller axis 28 is orthogonal with respect to the compaction axis 22, but in other examples the roller axis may be pivotable to become inclined relative the compaction axis.

The roller 20 is hollow and defines an internal chamber 30 which is sealed against the axle 21 with a fluid tight seal at axial ends of the roller 20. The axle 21 is hollow and defines an internal channel 25. The axle 21 comprises a plurality of perforations 32 between the seals at axial ends of the roller 20 (i.e. in a section of the axle 21 over which the roller 20 is mounted). Therefore, the channel 25 of the axle 21 is in fluid communication with the chamber 30 of the roller 20.

The head 14 also comprises a pressurised fluid system 50 which is configured to deliver and discharge pressurised air to and from the internal chamber 30 of the roller 20. In other examples, the pressurised fluid system may be configured to deliver and discharge any fluid to and from the chamber, such as nitrogen.

The pressurised fluid system 50 comprises a pressurised fluid inlet 52 to the roller mount 19 which is configured to be fluidically connected to a pressurised fluid source. The pressurised fluid inlet 52 is fluidically connected to the channel 25 of the axle 21. Therefore, the pressurised fluid system is configured to deliver and discharge pressurised air to and from the chamber 30 through the axle 21.

In this example, the pressurised fluid system 50 comprises a pressurised fluid source 54. The pressurised fluid source 54 in this example is a pump. In some examples, the pressurised fluid source may be the compressed gas apparatus of the biasing mechanism including the reservoir of compressed gas and the pneumatic actuator. In other examples it may be a separate fluid source. Configuring the pressurised fluid inlet 52 to be connectable to a reservoir of compressed gas ensures that the fibre placement head 14 is easily retrofittable to an existing fibre placement machine already having a compressed gas reservoir, or that an existing fibre placement head may be easily modified to make the fibre placement head as described above.

In some examples, the pressurised fluid source may comprise a compressor, pump or any other source of pressurised fluid. In other examples, the pressurised fluid system may not comprise a pressurised fluid source, and may merely be configured to be connected to one.

The pressurised fluid system 50 also comprises a pressurised fluid outlet 56 from the roller mount 19 which is configured to allow discharge of fluid from the chamber 30 to atmosphere. In other examples, the pressurised fluid outlet may be configured to allow discharge of fluid into a closed circuit to be fed back into a pressurised fluid source, and thus back into the chamber.

Pressure is maintained in the chamber 30 by an outlet valve 58 which is disposed at the pressurised fluid outlet 56. The outlet valve 58 prevents the discharge of pressurised air in the chamber 30 to atmosphere when it is closed, and permits discharge of the pressurised air from the chamber 30 when it is open. In this example, the outlet valve 58 is a pressure-maintaining valve which is mechanically configured so that when pressure in the chamber 30 exceeds a pressure release threshold, the outlet valve 58 passively opens to permit discharge of the air (i.e. it opens without the requirement of additional external stimulus).

In this example, the pressure release threshold of the outlet valve 58 is variable so as to enable control of pressure in the chamber 30.

The roller 20 is configured to deform to at least partially conform to the lay-up surface 12. The pressure of fluid in the chamber 30 corresponds to a radial stiffness of the roller 20, which determines the compaction or compliance of a roller to a surface curved about any axis which is non-parallel with the roller axis 28 (such as the lay-up surface 12 shown in Figure 2), when compressed against the surface. A lower radial stiffness makes the roller more compliant to a curved lay-up surface (i.e. it will deform more for the same compaction force), and a higher radial stiffness makes the roller less compliant to a curved lay-up surface (i.e. it will deform less for the same compaction force).

If the radial stiffness of the roller 20 is too high, the roller 20 may not be able to conform to a lay-up surface 12 with a high curvature. Therefore, non-conformance such as bridging may occur in which some of the tows 16 are not compacted against the lay-up surface in a depression or recess. If the radial stiffness of the roller 20 is too low, there may be inadequate application of pressure against the tows 16 for adhesion of the fibre reinforcement material during a lay-up operation. Further, if the radial stiffness of the roller is too low, steering of the tows 16 may be affected (i.e. the tows 16 may deviate from the intended course during lay-up because the pressure from the roller on the tows 16 is too low to cause the tows 16 to change direction).

Therefore, there is a compromise in radial stiffness between it being low enough to avoid such non-conformance, and it being high enough to ensure that tows are properly compacted and steered. Accordingly there may be an optimal stiffness which is dependent on the profile and curvature of the lay-up surface and the intended course of the tows (i.e. the intended headpath of the fibre placement head 14).

The pressurised fluid system 50 comprises a controller 60 to control the discharge of fluid from the chamber 30, thereby controlling the pressure in the chamber 30 and the radial stiffness of the roller 20.

In this example, the controller 60 controls the variable pressure release threshold of the outlet valve 58. One way of providing such control is for the outlet valve 58 to be retained in a closed position by a biasing force acting on a poppet in a seat. The biasing force may be from a spring, for example, or pneumatic pressure from a compressed air chamber. If the biasing force is increased or decreased, the pressure release threshold is correspondingly increased or decreased. Therefore, by changing the stiffness of the spring or the pressure of the air in a compressed air chamber of an outlet valve, the pressure release threshold of the valve may be changed, and thus the pressure in the chamber 30 may be changed. In other examples, the pressure release threshold may be changed in any suitable manner.

The controller 60 is configured to receive pressure control data for varying pressure within the chamber along a pre-programmed headpath of the fibre placement head. The controller 60 in this example is pre-programmed with the pressure control data. In other examples, the controller may receive the pressure control data in real-time during a lay-up operation. The pressure control data may be varying in time (i.e. data relating to variable predefined pressures correlated to time in a lay-up operation) or it may vary in space (i.e. data relating to variable predefined pressures correlated to a position of the fibre placement head in space). The controller 60 is configured to control the pressure in the chamber 30 based on the pressure control data by dynamically changing the pressure release threshold of the outlet valve 58, so as to vary the radial stiffness of the roller 20 at all points along the headpath of the fibre placement head 14 during a lay-up operation to correspond to the variable predefined pressures, which may be an optimum pressure determined as set above.

In other examples, the controller may be configured to actively control opening and closing of the outlet valve, to thereby control the pressure in the chamber. This may be done by opening and closing the outlet valve at a given frequency or duty cycle, or maintaining the valve in an open configuration with a variable orifice size.

In this example, the pressurised fluid system 50 also comprises a heater 64 configured to heat the pressurised air entering at the pressurised fluid inlet 52. Therefore, the pressurised fluid system is configured to deliver heated air to the chamber 30 in use. Delivering heated air to the chamber 30 enables heat transfer to the roller 20 and tows 16 during a lay-up operation. Heating tows 16 helps them to adhere to the lay-up surface 12 or a substrate on the lay-up surface 12, particularly if the tows 16 comprise fibre reinforcement material pre-impregnated with resin.

In some examples, the pressurised fluid may already be heated in the pressurised fluid source, such that no separate or additional heater is required to heat the air. In further examples, the air may not be heated, such that there may be no heater.

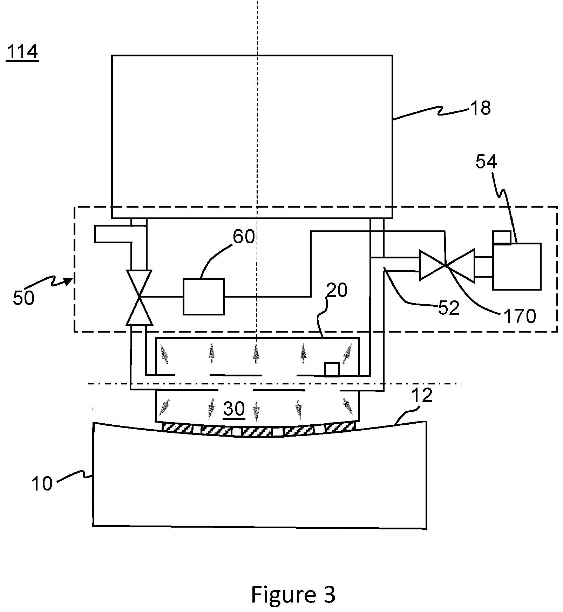

**Figure 3** shows a second example fibre placement head 114 which comprises all of the same features as the first example fibre placement head 14 of Figure 2, except that the pressurised fluid source 54 in this example is the compressed gas apparatus of the biasing mechanism, including the reservoir of compressed gas and the pneumatic actuator. In variants of this example, the pressurised fluid source may be a pump or any other kind of fluid source. The pressurised fluid system 50 of the fibre placement head 114 further includes an inlet valve 170 disposed at the pressurised fluid inlet 52 of the head 114.

The controller 60 is also configured to control the opening and closing of the inlet valve 170, in order to further selectively permit and prevent the intake of pressurised air into the chamber 30. Closing the inlet valve permits the pressure to reduce in the chamber below the pressure of the pressurised fluid source 54. Opening the inlet valve permits the pressure to rise in the chamber.

The pressurised fluid system 50 comprises a sensor 62 disposed in the chamber 30 to monitor the pressure in the chamber 30. The sensor is configured to output a pressure parameter to the controller 60 relating to the pressure in the chamber, and the controller 60 is configured to operate the outlet valve 58 and/or inlet valve 170 in a feedback loop to regulate the pressure in the chamber 30 based on the pressure parameter and the pressure control data.

In some examples, the sensor may merely output a pressure parameter for display or other monitoring purposes, for example, for calibrating the controller and outlet and inlet valves. The sensor may also be present in the first example fibre placement head 14, or may be omitted in a variant of the second example fibre placement head.

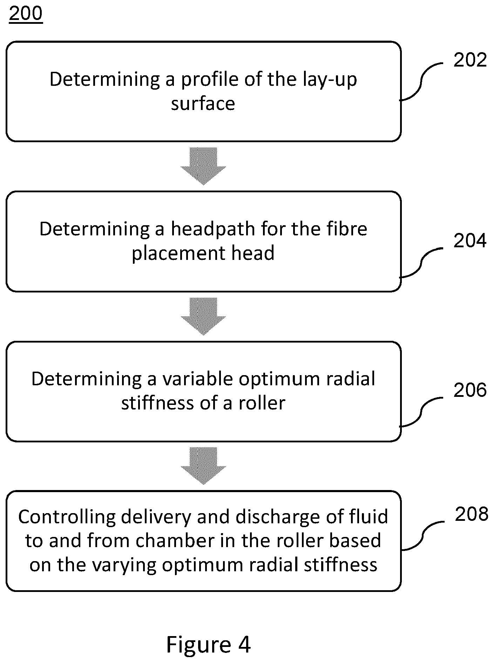

**Figure 4** is a flow chart showing steps of a process 200 for laying-up fibre reinforcement material on a lay-up surface using an example fibre placement head 14, 114 as described above with reference to Figures 2 and 3.

In box 202, the process includes determining a profile of the lay-up surface 12. In box 204, the process includes determining a headpath for the fibre placement head 14 (i.e. a pre-determined route over the lay-up surface of the roller 20).

In box 206, the profile of the lay-up surface 12 and the headpath of the fibre placement head 14, 114 are used to determine a variable radial stiffness of the roller 20 during a lay-up operation which may be an optimum stiffness determined as set out above.

In box 208, the process includes controlling discharge of fluid from the chamber 30 in the roller 20 based on the variable radial stiffness during a lay-up operation. The process may also include controlling delivery of to the chamber in the roller.

In some examples, the headpath for the fibre placement head may not be pre-determined, and the profile of the lay-up surface directly under the roller is monitored in real time during the lay-up procedure. Therefore, a variable stiffness is determined during the lay-up operation based on the real-time monitoring of the profile. The delivery and discharge of fluid is then controlled based on the real-time monitoring of the profile during the lay-up operation.

## Claims

1. A fibre placement head (14, 114) comprising:
a roller mount (19) comprising an axle (21) defining a roller axis (28);
a hollow roller (20) defining an internal chamber (30), the roller (20) being mounted on the axle (21) and configured to rotate about the roller axis (28); and
a pressurised fluid system (50) configured to deliver and discharge pressurised fluid to and from the internal chamber (30) of the roller (20), to vary a stiffness of the roller (20) by varying a pressure of fluid in the chamber (30)
wherein the pressurised fluid system (50) comprises a controller (60) configured to control the discharge and optionally the delivery of the fluid in the chamber (30) to control the pressure in the chamber (30);
**characterized in that** the controller (60) is configured to receive pressure control data, relating to time-varying or space-varying optimised pressure within the chamber (30) along a pre-programmed headpath for the fibre placement head (14, 114), and wherein the controller (60) is configured to control the pressure in the chamber (30) based on the pressure control data such that the stiffness of the roller (20) is varied along the headpath of the fibre placement head (14, 114).

2. A fibre placement head (14, 114) according to claim 1, wherein the pressurised fluid system (50) is configured to deliver and discharge pressurised fluid to and from the internal chamber (30) of the roller (20) through the axle (21) of the roller mount (19).

3. A fibre placement head (14, 114) according to any preceding claim, wherein the pressurised fluid system (50) comprises a pressurised fluid inlet (52) configured to be fluidically connected to a pressurised fluid source (54), and a pressurised fluid outlet (56) configured to allow discharge of fluid from the chamber (30).

4. A fibre placement head (14, 114) according to claim 3, wherein the pressurised fluid system (50) comprises an outlet valve (58) disposed at the pressurised fluid outlet (56), and selectively openable to allow discharge of the fluid from the chamber (30), to thereby control the pressure within the chamber (30) or wherein the pressurised fluid system (50) comprises an outlet valve (58) disposed at the pressurised fluid outlet (56), and wherein the outlet valve (58) has a pressure release threshold such that the outlet valve (58) passively opens when pressure of fluid in the chamber (30) exceeds the pressure release threshold.

5. A fibre placement head (14, 114) according to claim 4, wherein the controller (60) is configured to control the pressure release threshold of the outlet valve (58).

6. A fibre placement head (14, 114) according to any of claims 3-5, wherein the pressurised fluid system (50) comprises an inlet valve (170) disposed at the pressurised fluid inlet (52) and optionally, wherein the controller (60) is configured to control selective opening and closing of the inlet valve (170).

7. A fibre placement head (14, 114) according to any of claims 3-6, wherein the pressurised fluid system (50) comprises a pressurised fluid source (54) connected to the pressurised fluid inlet (52).

8. A fibre placement head (14, 114) according to any preceding claim, wherein the pressurised fluid system (50) comprises a sensor (62) disposed within the chamber (30) to monitor the pressure of the fluid within the chamber (30) and to generate a pressure parameter which is representative of the pressure in the chamber (30).

9. A fibre placement head (14, 114) according to claim 8, wherein the controller (60) receives the pressure parameter from the sensor (62), and controls discharge of the pressurised fluid from the chamber (30) based on the pressure parameter.

10. A fibre placement head (14, 114) according to any preceding claim, wherein the pressurised fluid system (50) comprises a heater (64) such that the pressurised fluid system (50) is configured to deliver heated pressurised fluid to the internal chamber (30) of the roller (20).

11. A fibre placement machine (40) comprising a fibre placement head (14, 114) according to any preceding claim.

12. A method of laying up fibre reinforcement material on a lay-up surface (12) with a fibre placement head (14, 114) according to any of claims 1-10, the method comprising:
the controller (60) receiving pressure control data and controlling the discharge of fluid from the chamber (30) of the roller (20) to vary the pressure in the chamber (30) of the roller (20) during lay-up based on the pressure control data.

13. A method according to claim 12, further comprising controlling the delivery of fluid into the chamber (30) of the roller (20) to vary the pressure in the chamber (30) of the roller (20) during lay-up.

14. A method according to claim 13, wherein the controller (60) receives pressure control data relating to a predetermined variable stiffness, and wherein the controller (60) controls the delivery of fluid from the chamber (30) during lay-up based on the pressure control data.

15. A method according to claim 14, comprising determining pressure control data for controlling the discharge of fluid from the chamber (30) of the roller (20) during lay-up, wherein the determination is based on determining a variable stiffness of the roller (20) along the headpath based on a profile of the lay-up surface (12) along the headpath.

## Patentansprüche

1. Faserverlegekopf (14, 114), umfassend:
eine Rollenlagerung (19), umfassend eine Achse (21), die eine Rollenachse (28) definiert,
eine hohle Rolle (20), die eine Innenkammer (30) definiert, wobei die Rolle (20) auf der Achse (21) gelagert und konfiguriert ist, um um die Rollenachse (28) zu drehen; und
ein Druckfluidsystem (50), das konfiguriert ist, um Druckfluid in die Innenkammer (30) der Rolle (20) zuzuführen und abzugeben, um eine Steifigkeit der Rolle (20) durch Verändern des Fluiddrucks in der Kammer (30) zu verändern
wobei das Druckfluidsystem (50) eine Steuerung (60) umfasst, die konfiguriert ist, um das Abgeben und optional die Zufuhr des Fluids in der Kammer (30) zu steuern, um den Druck in der Kammer (30) zu steuern,
**dadurch gekennzeichnet, dass** die Steuerung (60) konfiguriert ist, um Drucksteuerdaten zu empfangen, die sich auf einen zeitlich oder räumlich variierenden optimierten Druck innerhalb der Kammer (30) entlang eines vorprogrammierten Kopfwegs für den Faserverlegekopf (14, 114) beziehen, und wobei die Steuerung (60) konfiguriert ist, um den Druck in der Kammer (30) basierend auf den Drucksteuerdaten zu steuern, sodass die Steifigkeit der Rolle (20) entlang des Kopfwegs des Faserverlegekopfs (14, 114) variiert wird.

2. Faserverlegekopf (14, 114) nach Anspruch 1, wobei das Druckfluidsystem (50) konfiguriert ist, um durch die Achse (21) der Rollenlagerung (19) Druckfluid in die Innenkammer (30) der Rolle (20) zuzuführen und daraus abzugeben.

3. Faserverlegekopf (14, 114) nach einem der vorherigen Ansprüche, wobei das Druckfluidsystem (50) einen Druckfluideinlass (52), der konfiguriert ist, um fluidisch mit einer Druckfluidquelle (54) verbunden zu sein, und einen Druckfluidauslass (56), der konfiguriert ist, um ein Abgeben von Fluid aus der Kammer (30) zu ermöglichen, umfasst.

4. Faserverlegekopf (14, 114) nach Anspruch 3, wobei das Druckfluidsystem (50) ein Auslassventil (58) umfasst, das an dem Druckfluidauslass (56) angeordnet ist und selektiv geöffnet werden kann, um ein Abgeben von Fluid aus der Kammer (30) zu ermöglichen, um dadurch den Druck innerhalb der Kammer (30) zu steuern, oder wobei das Druckfluidsystem (50) ein Auslassventil (58) umfasst, das an dem Druckfluidauslass (56) angeordnet ist, und wobei das Auslassventil (58) einen Druckabbauschwellenwert aufweist, sodass das Auslassventil (58) passiv öffnet, wenn der Druck des Fluids in der Kammer (30) den Druckabbauschwellenwert überschreitet.

5. Faserverlegekopf (14, 114) nach Anspruch 4, wobei die Steuerung (60) konfiguriert ist, um den Druckabbauschwellenwert des Auslassventils (58) zu steuern.

6. Faserverlegekopf (14, 114) nach einem der Ansprüche 3-5, wobei das Druckfluidsystem (50) ein Einlassventil (170) umfasst, das an dem Druckfluideinlass (52) angeordnet ist, und optional wobei die Steuerung (60) konfiguriert ist, um ein selektives Öffnen und Schließen des Einlassventils (170) zu steuern.

7. Faserverlegekopf (14, 114) nach einem der Ansprüche 3-6, wobei das Druckfluidsystem (50) eine Druckfluidquelle (54) umfasst, die mit dem Druckfluideinlass (52) verbunden ist.

8. Faserverlegekopf (14, 114) nach einem der vorherigen Ansprüche, wobei das Druckfluidsystem (50) einen Sensor (62) umfasst, der innerhalb der Kammer (30) angeordnet ist, um den Druck des Fluids innerhalb der Kammer (30) zu überwachen und einen Druckparameter zu erzeugen, der repräsentativ für den Druck in der Kammer (30) ist.

9. Faserverlegekopf (14, 114) nach Anspruch 8, wobei die Steuerung (60) den Druckparameter von dem Sensor (62) empfängt und ein Abgeben des unter Druck stehenden Fluids aus der Kammer (30) basierend auf dem Druckparameter steuert.

10. Faserverlegekopf (14, 114) nach einem der vorherigen Ansprüche, wobei das Druckfluidsystem (50) eine Heizung (64) umfasst, sodass das Druckfluidsystem (50) konfiguriert ist, um der Innenkammer (30) der Rolle (20) erwärmtes Druckfluid zuzuführen.

11. Faserverlegungsmaschine (40), umfassend einen Faserverlegekopf (14, 114) nach einem vorherigen Anspruch.

12. Verfahren zum Verlegen von Faserverstärkungsmaterial auf einer Auflagefläche (12) mit einem Faserverlegekopf (14, 114) nach einem der Ansprüche 1-10, das Verfahren umfassend:
wobei die Steuerung (60) Drucksteuerdaten empfängt und ein Abgeben von Fluid aus der Kammer (30) der Rolle (20) steuert, um beim Auflegen den Druck in der Kammer (30) der Rolle (20) basierend auf den Drucksteuerdaten zu verändern.

13. Verfahren nach Anspruch 12, ferner umfassend ein Steuern der Zufuhr von Fluid in die Kammer (30) der Rolle (20), um beim Auflegen den Druck in der Kammer (30) der Rolle (20) zu verändern.

14. Verfahren nach Anspruch 13, wobei die Steuerung (60) Drucksteuerdaten empfängt, die sich auf eine vorbestimmte variable Steifigkeit beziehen, und wobei die Steuerung (60) beim Auflegen die Zufuhr von Fluid aus der Kammer (30) basierend auf den Drucksteuerdaten zu steuern.

15. Verfahren nach Anspruch 14, umfassend ein Bestimmen von Drucksteuerdaten zum Steuern des Abgebens von Fluid aus der Kammer (30) der Rolle (20) beim Auflegen, wobei die Bestimmung auf einem Bestimmen einer variablen Steifigkeit der Rolle (20) entlang des Kopfwegs basierend auf einem Profil der Auflagefläche (12) entlang des Kopfwegs basiert.

## Revendications

1. Tête de placement de fibres (14, 114) comprenant :
un porte-rouleau (19) comprenant un axe (21) définissant un axe de rouleau (28) ;
un rouleau creux (20) définissant une chambre interne (30), le rouleau (20) étant monté sur l'axe (21) et configuré pour tourner autour de l'axe de rouleau (28) ; et
un système de fluide sous pression (50) configuré pour distribuer et décharger un fluide sous pression à et depuis la chambre interne (30) du rouleau (20), pour faire varier une rigidité du rouleau (20) en faisant varier une pression de fluide dans la chambre (30)
dans laquelle le système de fluide sous pression (50) comprend un contrôleur (60) configuré pour commander la décharge et éventuellement la distribution du fluide dans la chambre (30) pour commander la pression dans la chambre (30) ;
**caractérisée en ce que** le contrôleur (60) est configuré pour recevoir des données de commande de pression, relatives à une pression optimisée variant dans le temps ou variant dans l'espace à l'intérieur de la chambre (30) le long d'un trajet de tête préprogrammé pour la tête de placement de fibres (14, 114), et dans laquelle le contrôleur (60) est configuré pour commander la pression dans la chambre (30) sur la base des données de commande de pression de telle sorte que la rigidité du rouleau (20) varie le long du trajet de tête de la tête de placement de fibres (14, 114).

2. Tête de placement de fibres (14, 114) selon la revendication 1, dans laquelle le système de fluide sous pression (50) est configuré pour distribuer et décharger un fluide sous pression à et depuis la chambre interne (30) du rouleau (20) à travers l'axe (21) du porte-rouleau (19).

3. Tête de placement de fibres (14, 114) selon l'une quelconque des revendications précédentes, dans laquelle le système de fluide sous pression (50) comprend une entrée de fluide sous pression (52) configurée pour être reliée fluidiquement à une source de fluide sous pression (54), et une sortie de fluide sous pression (56) configurée pour permettre la décharge du fluide depuis la chambre (30).

4. Tête de placement de fibres (14, 114) selon la revendication 3, dans laquelle le système de fluide sous pression (50) comprend une vanne de sortie (58) disposée au niveau de la sortie de fluide sous pression (56) et pouvant être ouverte de manière sélective pour permettre la décharge du fluide depuis la chambre (30), pour commander ainsi la pression à l'intérieur de la chambre (30) ou dans laquelle le système de fluide sous pression (50) comprend une vanne de sortie (58) disposée au niveau de la sortie de fluide sous pression (56), et dans laquelle la vanne de sortie (58) a un seuil de relâchement de pression tel que la vanne de sortie (58) s'ouvre passivement lorsque la pression du fluide dans la chambre (30) dépasse le seuil de relâchement de pression.

5. Tête de placement de fibres (14, 114) selon la revendication 4, dans laquelle le contrôleur (60) est configuré pour commander le seuil de relâchement de pression de la vanne de sortie (58).

6. Tête de placement de fibres (14, 114) selon l'une quelconque des revendications 3 à 5, dans laquelle le système de fluide sous pression (50) comprend une vanne d'entrée (170) disposée au niveau de l'entrée de fluide sous pression (52) et facultativement, dans laquelle le contrôleur (60) est configuré pour commander l'ouverture et la fermeture sélectives de la vanne d'entrée (170).

7. Tête de placement de fibres (14, 114) selon l'une quelconque des revendications 3 à 6, dans laquelle le système de fluide sous pression (50) comprend une source de fluide sous pression (54) reliée à l'entrée de fluide sous pression (52).

8. Tête de placement de fibres (14, 114) selon l'une quelconque des revendications précédentes, dans laquelle le système de fluide sous pression (50) comprend un capteur (62) disposé à l'intérieur de la chambre (30) pour surveiller la pression du fluide à l'intérieur de la chambre (30) et pour générer un paramètre de pression qui est représentatif de la pression dans la chambre (30).

9. Tête de placement de fibres (14, 114) selon la revendication 8, dans laquelle le contrôleur (60) reçoit le paramètre de pression du capteur (62) et commande la décharge du fluide sous pression depuis la chambre (30) sur la base du paramètre de pression.

10. Tête de placement de fibres (14, 114) selon l'une quelconque des revendications précédentes, dans laquelle le système de fluide sous pression (50) comprend un élément chauffant (64) de sorte que le système de fluide sous pression (50) soit configuré pour distribuer un fluide sous pression chauffé à la chambre interne (30) du rouleau (20).

11. Machine de placement de fibres (40) comprenant une tête de placement de fibres (14, 114) selon l'une quelconque des revendications précédentes.

12. Procédé de pose d'un matériau de renfort de fibres sur une surface de pose (12) avec une tête de placement de fibres (14, 114) selon l'une quelconque des revendications 1 à 10, le procédé comprenant :
le contrôleur (60) recevant des données de commande de pression et commandant la décharge de fluide depuis la chambre (30) du rouleau (20) pour faire varier la pression dans la chambre (30) du rouleau (20) pendant la pose sur la base des données de commande de pression.

13. Procédé selon la revendication 12, comprenant en outre la commande de la distribution de fluide dans la chambre (30) du rouleau (20) pour faire varier la pression dans la chambre (30) du rouleau (20) pendant la pose.

14. Procédé selon la revendication 13, dans lequel le contrôleur (60) reçoit des données de commande de pression relatives à une rigidité variable prédéterminée, et dans lequel le contrôleur (60) commande la distribution de fluide depuis la chambre (30) pendant la pose sur la base des données de commande de pression.

15. Procédé selon la revendication 14, comprenant la détermination de données de commande de pression pour commander la décharge de fluide depuis la chambre (30) du rouleau (20) pendant la pose, dans lequel la détermination est basée sur la détermination d'une rigidité variable du rouleau (20) le long du trajet de tête sur la base d'un profil de la surface de pose (12) le long du trajet de tête.
